# EUROPÄISCHE PATENTSCHRIFT

(11) **EP 4 414 887 B1**
(45) Veröffentlichungstag und Bekanntmachung des Hinweises auf die Patenterteilung: **29.01.2025**
(21) Anmeldenummer: 24151460.3
(22) Anmeldetag: 11.01.2024
(51) Int. Cl.: G06K 7/10, G06K 7/14

(54) **CODELESEVORRICHTUNG UND VERFAHREN ZUM PARALLELEN LESEN EINER VIELZAHL VON CODES**
CODE READING APPARATUS AND METHOD FOR PARALLEL READING OF A PLURALITY OF CODES
DISPOSITIF DE LECTURE DE CODE ET PROCÉDÉ DE LECTURE PARALLÈLE D'UNE PLURALITÉ DE CODES

(30) Priorität: 07.02.2023 DE 102023102950
(43) Veröffentlichungstag der Anmeldung: 14.08.2024
(73) Patentinhaber: SICK AG, 79183 Waldkirch (DE)
(72) Erfinder: Lais, Stefan, 78148 Gütenbach (DE); Hafner, Carl Joseph, 79276 Reute (DE); Pierl, Manfred, 52146 Wuerselen (DE); Zimmermann, Tobias, 53474 Bad Neuenahr-Ahrweiler (DE); Ermantraut, Jaroslaw, 79183 Waldkirch (DE)

(56) Entgegenhaltungen:
- DE-A1- 102019 134 064
- US-A1- 2014 034 731

## Beschreibung

Die Erfindung betrifft ein System mit einer Beförderungseinheit und einer Codelesevorrichtung sowie ein Verfahren zum parallelen Lesen einer Vielzahl von Codes auf einer Vielzahl von Objekten in einer Beförderungseinheit nach dem Oberbegriff von Anspruch 1 beziehungsweise 12.

Es gibt Codeleseanwendungen, in denen eine große Anzahl optischer Codes oder Barcodes gleichzeitig gelesen werden müssen. Beispielsweise geschieht dies im Pharmabereich, wo die Codes einer Vielzahl von Medikamentenverpackungen gelesen werden, die gemeinsam in einer Kiste untergebracht sind. Ähnliche Problemstellungen ergeben sich bei Zigaretten oder Inventuraufgaben im Bereich der Logistik. Für solche Anwendungen gibt es bildbasierte Multicodeleser, die ein gemeinsames Bild zahlreicher Objekte mit Codes aufnehmen und diese Codes lesen.

Die DE 10 2019 134 064 A1 ist in der Präambel von Anspruch 1 reflektiert und offenbart ein System mit einer Beförderungseinheit und einer entsprechenden Codelesevorrichtung mit einer Kameraeinheit. Dort ist zusätzlich ein Handlesegerät vorgesehen, um zunächst nicht gelesene Codes nachzulesen. Dabei sind Auswertungsmechanismen implementiert, die das Auffinden solcher zunächst nicht gelesener Codes vereinfachen und sicherstellen, dass am Ende alle Codes gelesen sind. Die Codelesevorrichtung ist außerdem in ein übergeordnetes System mit einer zentralen Datenbank eingebunden, um die Authentizität des Codes zu bestätigen und Fälschungen auszuschließen.

Ein jeweiliger Code wird dabei jedoch nur dem gesamten Kameralesefeld beziehungsweise der Kiste mit den codetragenden Objekten als solcher zugeordnet. Eine feinere örtliche oder geometrische Unterscheidung innerhalb der Kiste ist nicht vorgesehen. Dabei ist natürlich im Rahmen des Decodierens und Auffindens nicht gelesener Codes noch bekannt, wo sich der Code im aufgenommenen Bild befindet, aber dies wird dann nicht mit der Kiste und deren Geometrie oder Unterstruktur verknüpft.

In anderen Codeleseanwendungen werden die Objekte auf einem Förderband durch den Lesebereich gefördert, d.h. das Lesen der Codes erfolgt nacheinander statt parallel für zahlreiche Codes. In diesem Zusammenhang ist auch bekannt, die Codes einem jeweiligen codetragenden Objekt zuzuordnen. Dies wird beispielsweise in der US 2013/020391 A1 beschrieben. Eine Kiste oder dergleichen, in der eine räumliche Zuordnung überhaupt möglich wäre, gibt es dabei nicht. Die US 2014/0034731 A1 beschreibt eine Kalibration und einen Selbsttest in einem derartigen System.

Die DE 20 2019 104 044 U1 beschreibt ein System zum Verifizieren und Ausmelden von Medikamentenverpackungen anhand verpackungsspezifischer, individueller Seriennummern. Dabei geht es darum, wie die Kommunikation der Codeinformationen beispielsweise zwischen einer Klinikapotheke und einem Drittanbieter einer Verifikationsdatenbank erfolgen kann. Das eigentliche Erfassen der Codes oder Codelesen wird nicht näher betrachtet. Die WO 2019/149908 A1 beschreibt ein Verfahren zum Überwachen der Lieferkette eines Produkts. Dazu werden verschiedene Verschlüsselungsverfahren einschließlich einer Blockchain vorgeschlagen.

Es ist daher Aufgabe der Erfindung, das parallele Codelesen weiter zu verbessern.

Diese Aufgabe wird durch ein System mit einer Beförderungseinheit und einer Codelesevorrichtung sowie ein Verfahren zum parallelen Lesen einer Vielzahl von Codes auf einer Vielzahl von Objekten in einer Beförderungseinheit nach Anspruch 1 beziehungsweise 12 gelöst. Die Codelesevorrichtung ist für eine parallele Massenlesung auch größerer Gruppen von Objekten mit Codes eingerichtet. Die Objekte sie befinden sich gemeinsam in einer Beförderungseinheit, beispielsweise in einer Kiste, auf einer Palette oder dergleichen. Im Rahmen der Massenlesung werden die vorhandenen Codes auf einmal gelesen, nicht wie sonst oft üblich Objekte mit jeweiligem Code nacheinander präsentiert oder nacheinander auf einem Band durch ein Lesefeld eines Codelesers gefördert.

Eine Kameraeinheit mit mindestens einem Kamerakopf nimmt ein Bild der Objekte samt Codes auf. Die Kameraeinheit erfasst die Beförderungseinheit von der relevanten Seite her, wo die Codes erkennbar sind, insbesondere aus der Draufsicht. Dazu wird beispielsweise die Kiste so gepackt, dass die einen Code tragenden Deckseiten der Objekte nach oben zeigen. Eine Steuer- und Auswertungseinheit identifiziert die Codebereiche in dem Bild und liest die Codes. Sie bestimmt zudem die Position eines jeweiligen Codes in dem Bild.

Die Erfindung geht von dem Grundgedanken aus, die Anordnung der Objekte mit den Codes in der Beförderungseinheit in die weitere Verarbeitung einzubeziehen. Der Position eines Codes in dem Bild wird eine Position in der Beförderungseinheit zugeordnet. Damit steht ein Code und infolgedessen ein den Code tragendendes Objekt in einer geometrischen Beziehung zu der Beförderungseinheit. Dies kann als eine Art geometrisches Filter verstanden werden, mit dem Codes zusätzlich zu ihrem gelesenen Codeinhalt verarbeitet werden können. Die Zuordnung zu einer Position in der Beförderungseinheit ist in gewisser Weise eine Transformation aus einem Koordinatensystem des aufgenommenen Bildes in ein Koordinatensystem der Beförderungseinheit. Dabei kann jedoch, wie im Folgenden zu vorteilhaften Ausführungsformen erläutert, die Auflösung der Positionen in der Beförderungseinheit, auch sehr deutlich, von derjenigen des Bildes abweichen, insbesondere nur eine vergleichsweise grobe Position oder Klasse von Positionen in der Beförderungseinheit bestimmt werden.

Die Erfindung hat den Vorteil, dass zusätzliche Informationen über die gelesenen Codes zur Verfügung stehen. Dies lässt verfeinerte Folgeschritte mit differenzierter Weiterverarbeitung zu. Allgemein ausgedrückt lassen sich mit den gelesenen Codes beliebige zusätzliche Operationen in Abhängigkeit von ihrer Position in der Beförderungseinheit durchführen. Die Position ist ein geometrisches Filter, mit der ein nachgelagerter Verarbeitungsschritt gezielt nur auf bestimmte gelesene Codes angewandt wird, die eine Eigenschaft für eine Position in der Beförderungseinheit erfüllen.

Die Beförderungseinheit weist eine Vielzahl von durch Unterteilungen voneinander separierten Teilbereichen auf, wobei die Steuer- und Auswertungseinheit dafür ausgebildet ist, einen Code einem Teilbereich zuzuordnen. Damit sind physische Unterteilungen gemeint, mit denen die Beförderungseinheit in Teilbereiche oder Fächer unterteilt ist. Anhand der Position eines Codes in der Beförderungseinheit wird erkannt oder klassifiziert, in welchem Teilbereich oder Fach sich das Objekt mit diesem Code befindet.

Die Steuer- und Auswertungseinheit ist bevorzugt dafür ausgebildet, zwei Codes gleichen Codeinhalts anhand ihrer Position, insbesondere dem zugeordneten Teilbereich zu unterscheiden. Zuvor ununterscheidbare Codes werden demnach anhand ihrer Position oder ihres Teilbereichs beziehungsweise Faches vereinzelt. Das ist ein Anwendungsbeispiel eines geometrischen Filters, das die ihrem Codeinhalt nach gleichen Codes einzeln verarbeitbar macht.

Die Steuer- und Auswertungseinheit ist für einen Einrichtmodus ausgebildet, in dem die Teilbereiche anhand eines Bildes einer Beförderungseinheit eingelernt werden, insbesondere einer leeren Beförderungseinheit, das an einer festgelegten Position der Beförderungseinheit bezüglich der Kameraeinheit aufgenommen ist. Der Einrichtmodus, der auch als Einlern-, Inbetriebnahme- oder Kalibrationsmodus bezeichnet werden kann, dient dazu, der Steuer- und Auswertungseinheit die Teilbereiche der Beförderungseinheit für den nachfolgenden Betrieb bekannt zu machen. Das Ergebnis des Einrichtmodus' ist demnach eine Zuordnungsvorschrift, die einer Position in der Beförderungseinheit den passenden Teilbereich zuordnet. Die Repräsentation dieser Zuordnungsvorschrift ist auf verschiedene Weise möglich, sei es als Funktion oder Tabelle, die jeder möglichen Position in der Beförderungseinheit einen Teilbereich zuordnet oder vorzugsweise eine komprimiertere Repräsentation beispielsweise anhand der Begrenzungen oder Ecken von Teilbereichen. Das Einlernen wie die Repräsentation vereinfachen sich in Kenntnis einer einfachen geometrischen Form der Teilbereiche, beispielsweise einer rechteckigen Form von Fächern. Zum Einlernen wird eine Beförderungseinheit in eine festgelegte Position bezüglich der Kameraeinheit gebracht, wobei die festgelegte Position dazu dient, dass dies später im Betrieb reproduziert beziehungsweise ein korrigierender Versatz einer tatsächlichen späteren Position der Beförderungseinheit zu der festgelegten Position korrigiert werden kann.

Die Beförderungseinheit ist bevorzugt mittels eines mechanischen Anschlags in eine festgelegte Position gebracht. Die festgelegte Position ist vorzugsweise dieselbe, die während des Einrichtmodus' verwendet wird, andernfalls kann ein Offset bestimmt und korrigiert werden. Durch den Anschlag ist mechanisch sichergestellt oder zumindest unterstützt, dass sich die Beförderungseinheit beim Lesen der Codes in der im Einrichtmodus verwendeten festgelegten Position oder zumindest in einem festen Offset befindet. Besonders bevorzugt lässt die Codelesevorrichtung baulich überhaupt nur eine Position für eine Beförderungseinheit zu, jedenfalls wird dem Anwender durch den mechanischen Anschlag erheblich vereinfacht, mit der Beförderungseinheit die festgelegte Position einzunehmen. Der Anschlag kann beliebig ausgestaltet sein, solange dadurch eine Position wenigstens teilweise festgelegt wird, beispielsweise als Winkel oder sonstige Teilkontur oder als Vertiefung mit zumindest einer Teilkontur entsprechend der Beförderungseinheit. Als Alternative dazu, im Betrieb eine festgelegte Position der Beförderungseinheit zu verlangen, kann die tatsächlich eingenommene Position der Beförderungseinheit aus dem aufgenommenen Bild bestimmt und ein entsprechendes Offset zu der festgelegten Position aus dem Einrichtmodus korrigiert werden.

Die Steuer- und Auswertungseinheit ist bevorzugt dafür ausgebildet, die Teilbereiche einzulernen, indem Kanten von Abtrennungen der Teilbereiche in dem Bild der Beförderungseinheit erkannt werden, wobei insbesondere Kanten einem Teilbereich anhand einer bekannten Form der Teilbereiche zugeordnet werden. Somit werden klassische und an sich bekannte Verfahren der Bildverarbeitung eingesetzt, um Kanten zu erkennen, und diese Kanten werden dann zu den Teilbereichen zusammengesetzt. Die Kanten entsprechen dem Rand der Beförderungseinheit und den physischen Unterteilungen oder Trennstegen zwischen den Teilbereichen. Das Auffinden dieser Kanten ist vereinfacht, wenn eine leere Beförderungseinheit aufgenommen wird, weil es dann keine zusätzlichen Kanten von Objekten oder Codes gibt. Alternativ können relevante Kanten, die Teilbereiche begrenzen, und nicht relevante Kanten von anderen Strukturen mit Bildverarbeitungsverfahren unterschieden werden. Die Erkennung von Teilbereichen wird bei Bildfilter wie Lehrer Beförderungseinheit durch die Randbedingung einer bekannten Form, wie rechteckig, gegebenenfalls auch Größe der Teilbereiche erleichtert. Dadurch können auch Fehler der Bildaufnahme oder Kantenerkennung ausgeglichen werden, aufgrund derer Kanten lückenhaft bleiben beziehungsweise Bildstörungen fehlerhaft als Teile von Kanten erkannt werden.

Die Steuer- und Auswertungseinheit ist bevorzugt dafür ausgebildet, einen Code einem Teilbereich mit Hilfe eines Verfahrens des maschinellen Lernens zuzuordnen. Das Verfahren des maschinellen Lernens wird im Folgenden stellvertretend als neuronales Netz bezeichnet, ohne damit andere Verfahren des maschinellen Lernens auszuschließen. Bevorzugt handelt es sich um ein tiefes neuronales Netz (Deep Neural Network) beziehungsweise ein Faltungsnetz (CNN, Convolutional Neural Network). Prinzipiell ist denkbar, die Zuordnung eines gelesenen Codes zu einem Teilbereich sowohl mit klassischer Bildverarbeitung als auch einem Verfahren des maschinellen Lernens vorzunehmen und beispielsweise die Ergebnisse zu vergleichen, zu plausibilisieren oder zu mitteln.

Die Steuer- und Auswertungseinheit ist bevorzugt dafür ausgebildet, das Verfahren des maschinellen Lernens mittels überwachten Lernens (supervised learning) zu trainieren, wobei dem Verfahren des maschinellen Lernens wiederholt Bilder von Beförderungseinheiten mit Codes und bekannter Zuordnung zu einem jeweiligen Teilbereich präsentiert werden. Es gibt demnach einen Satz von Trainingsbildern mit der Beförderungseinheit und Codes an verschiedenen Positionen, für die bekannt ist, welcher Teilbereich den Codes zugeordnet werden soll. Diese Vorgabe (annotation, labeling) wird händisch oder auch durch ein anderes Bildverarbeitungssystem erzeugt. Je Trainingsschritt macht dann das Verfahren des maschinellen Lernens eine Klassifikationsaussage, welchem Teilbereich es einen jeweiligen Code zuordnet. Es erhält ein Fehlersignal je nach Abweichung von der für das Trainingsbild vorab bekannten richtigen Zuordnung und lernt aus diesem Fehler, beispielsweise in einem neuronalen Netz durch Anpassung von Gewichten mittels Backpropagation. Es ist vorstellbar, dass ein neuronales Netz nicht nur gelesene Codes einem Teilbereich zuordnet, sondern die Codes auch selbst liest. Dazu müssen jedoch die Trainingsbilder zusätzlich mit den Codeinhalten annotiert werden, und wegen der großen Vielfalt möglicher Codetypen, Codegrößen, Codepositionen und Codeinhalte ist ein sehr großer Trainingsdatensatz erforderlich. Die reine Zuordnung zu Teilbereichen hingegen leistet schon ein kleineres neuronales Netz mit vergleichsweise wenigen Trainingsbildern. Eine Möglichkeit, mit der Komplexität umzugehen und dennoch den Anwendungsbereich für ein Verfahren des maschinellen Lernens auszuweiten, besteht darin, die Aufgaben auf mehrere neuronale Netze aufzuteilen. Beispielsweise leistet ein neuronales Netz eine Vorsegmentierung, ein weiteres neuronales Netz liest Codes aus den resultierenden Bildausschnitten, während ein drittes neuronales Netz die Zuordnung zu einem Teilbereich findet. Neuronale Netze für Teilaufgaben wie die Segmentierung oder das Lesen von Codes beziehungsweise entsprechende Trainingsdatensätze gibt es nämlich bereits.

Die Codelesevorrichtung weist vorzugsweise mehrere Kameraköpfe auf, wobei die Steuer- und Auswertungseinheit dafür ausgebildet ist, die Bilddaten der Kameraköpfe zu einem gemeinsamen Bild zusammenzufügen und/oder die Codes in den jeweiligen Bilddaten zu lesen und miteinander zu vergleichen. Die mehreren Kameraköpfe dienen dazu, ein größeres und/oder höher aufgelöstes Bild aufzunehmen. Die einzelnen Bilder der Kameraköpfe können zu einem Bild fusioniert werden, das dann behandelt wird wie das Bild nur eines einzigen Kamerakopfes, oder es werden jeweils Codes in den einzelnen Bildern gelesen, wobei die Auswertung der Bilder auch parallelisiert werden kann. Vorzugsweise ist der Überlapp der Sichtfelder der Kameraköpfe größer als ein Code, denn dann kann jeder Code in einem Bildbereich derselben Kamera gelesen werden und muss keine Übergangsbereiche berücksichtigen (Stitching).

Die Kameraeinheit weist bevorzugt eine veränderbare Beleuchtungseinheit auf, insbesondere mit mehreren Beleuchtungsmodulen, wobei die Steuer- und Auswertungseinheit dafür ausgebildet ist, für das parallele Lesen der Codes die Objekte mehrfach unter verschiedenen Beleuchtungen aufzunehmen, insbesondere bei Beleuchtung aus unterschiedlichen Richtungen. Die Beleuchtungseinheit ist in der Lage, unterschiedliche Beleuchtungsszenarien zu erzeugen, unter denen womöglich andere beziehungsweise mehr Codes gelesen werden können. Dazu wird insbesondere die Beleuchtungsstärke und/oder die Richtung der Beleuchtung variiert. Eine bevorzugte Ausführungsform sieht vor, je ein Beleuchtungsmodul rechts und links der Kameraeinheit zu positionieren und drei Aufnahmen bei Beleuchtung von je einer beziehungsweise von beiden Seiten zu erzeugen. So werden nachteilige Effekte durch Eigenblendung sowie Unter- und Übersteuerung kompensiert. Die mehreren Bilder werden je nach Ausführungsform zunächst zu einem Bild besserer Qualität fusioniert, ähnlich einer HDR-Aufnahme (High Dynamic Range), oder die Steuer- und Auswertungseinheit liest Codes nacheinander aus mehreren oder jedem der Bilder.

In bevorzugter Weiterbildung ist ein System mit einer erfindungsgemäßen Codelesevorrichtung und mit mindestens einer Beförderungseinheit vorgesehen, die insbesondere eine Vielzahl von durch Unterteilungen voneinander separierten Teilbereichen aufweist. Vorzugsweise gibt es zahlreiche Beförderungseinheiten, die in dem Sinne gleichartig sind, dass sie gleiche Abmessungen und Unterteilungen aufweisen, und jeweils eine davon wird dem Codeleser im Sichtfeld der Kameraeinheit präsentiert. Es kann abweichend mehrere Typen von Beförderungseinheiten geben, die nur innerhalb eines Typs gleiche Abmessungen und Unterteilungen aufweisen. Dann erkennt die Codelesevorrichtung den Typ und behandelt die Beförderungseinheit mit diesem Vorverarbeitungsschritt so wie nur eine einzige Familie gleichartiger Beförderungseinheiten.

Das System weist bevorzugt ein Gerüst mit einer Auflage auf, auf die die Beförderungseinheit gestellt ist, wobei die Kameraeinheit stationär an dem Gerüst angeordnet ist. Dadurch entsteht ein kompaktes Gesamtgerät mit definierten räumlichen Beziehungen. Eine Beförderungseinheit mit jeweils zu lesenden Codes wird auf die Auflage gestellt. Es handelt sich, wie schon mehrfach erläutert, um eine Präsentationsanwendung, in der die Beförderungseinheit für das Codelesen ruht, es wird nicht wie in vielen anderen Codeleseanwendungen während einer Förderbewegung aufgenommen. An dem Gerüst wird die Kameraeinheit montiert, die somit eine feste Position und vorzugsweise auch Ausrichtung zu der Auflage und damit der Beförderungseinheit einnimmt.

Die Auflage weist bevorzugt einen mechanischen Anschlag auf, um der Beförderungseinheit eine festgelegte Position bezüglich der Kameraeinheit zu geben. Für die Funktion und die möglichen Ausgestaltungen des mechanischen Anschlags sowie denkbare Alternativen wird auf die entsprechenden Erläuterungen oben im Zusammenhang mit der Codelesevorrichtung verwiesen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung einer Codelesevorrichtung mit Kameraeinheit zum parallelen Lesen von Codes;
- Fig. 2: eine weitere dreidimensionale Ansicht einer möglichen mechanischen Ausgestaltung der Codelesevorrichtung;
- Fig. 3: eine schematische Draufsicht auf eine Vielzahl von Objekten mit Codes in einer Beförderungseinheit; und
- Fig. 4: ein beispielhaftes Kamerabild entsprechend der schematischen Draufsicht der Figur 3.

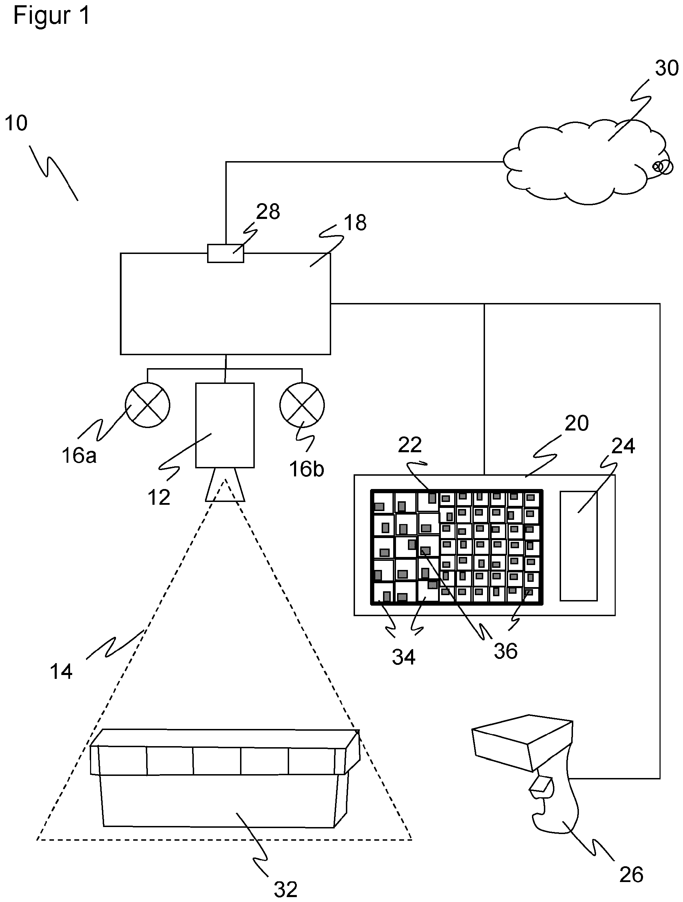

Figur 1 zeigt eine Übersichtsdarstellung einer Codelesevorrichtung 10. Sie ist als Komplettsystem ausgebildet, das einen kamerabasierten parallelen Leseprozess anbietet, um eine Vielzahl von Codes zu lesen. Die Codelesevorrichtung 10 weist eine Kameraeinheit 12 auf, deren Kamerakopf in Figur 1 nur symbolisch gezeigt ist. Die Kameraeinheit 12 umfasst ohne gesonderte Darstellung einen vorzugsweise hochauflösenden Bildsensor, eine geeignete Optik und eine Schnittstelle zumindest zur Ausgabe der jeweils aufgenommenen Bilddaten. Falls das Sichtfeld 14 eines einzelnen Kamerakopfes nicht ausreicht, können mehrere Kameraköpfe nebeneinander angeordnet werden. Der Kameraeinheit 12 ist eine Beleuchtungseinheit zugeordnet, die in Figur 1 mit zwei Beleuchtungsmodulen 16a-b zu beiden Seiten ausgestaltet ist. Die Beleuchtungsmodule 16a-b sind vorzugsweise besonders lichtstark mit entsprechend leistungsfähigen LEDs oder Laserdioden.

Eine Steuer- und Auswertungseinheit 18 greift auf die Bilddaten der Kameraeinheit 12 zu, wertet sie aus und steuert während der Aufnahmen die Beleuchtungsmodule 16a-b.

Die Steuer- und Auswertungseinheit 18 weist mindestens einen digitalen Rechenbaustein auf, wie mindestens einen Mikroprozessor, mindestens ein FPGA (Field Programmable Gate Array), mindestens einen DSP (Digital Signal Processor), mindestens ein ASIC (Application-Specific Integrated Circuit), mindestens eine VPU (Video Processing Unit) oder mindestens einen Neural Processor. Auf einer Anzeige 20 können Bilder der Kameraeinheit 12 und Auswertungsergebnisse dargestellt werden. Die Anzeige 20 ist vorzugsweise als Touchscreen ausgebildet und dient dann zugleich als Bedieneinheit der Codelesevorrichtung 10. Beispielsweise ist auf der Anzeige 20 ein erster Bereich 22 zum Darstellen von Bildern und ein zweiter Bereich 24 für Bedienelemente vorgesehen.

Optional ist an die Steuer- und Auswertungseinheit 18 drahtlos oder drahtgebunden ein ergänzender Handscanner 26 angeschlossen. Über eine Schnittstelle 28 kann die Steuer- und Auswertungseinheit 18 mit einem übergeordneten System kommunizieren, beispielsweise einer übergeordneten Steuerung, einem angeschlossenen Netzwerk, einem Edge-Device oder wie dargestellt einer Cloud 30. Die Steuer- und Auswertungseinheit 18 kann anders als dargestellt zumindest teilweise extern in dem übergeordneten System implementiert sein. Die Schnittstelle 28 kann nach jedem bekannten Standard eingerichtet sein, beispielsweise drahtgebunden oder drahtlos, beispielsweise per WiFi oder Mobilfunk.

Im Sichtfeld 14 der Kameraeinheit 12 ist eine Beförderungseinheit angeordnet, im Folgenden stellvertretend als Kiste 32 bezeichnet, in der sich eine Vielzahl von Objekten 34 mit darauf angebrachten optischen Codes 36 befindet. Das ist aufgrund der Perspektive in Figur 1 nur auf der Anzeige 20 zu erkennen. Um die Codes 36 in der Kiste 32 zu lesen, wird zunächst von der Kameraeinheit 12 ein Bild der Kiste mit den darin befindlichen Objekten 34 und Codes 36 aufgenommen, wie es beispielhaft im ersten Bereich 22 der Anzeige 20 dargestellt ist. Die Perspektive der Kameraeinheit 12, hier in der Draufsicht, sowie die Orientierung der Objekte 34 in der Kiste 32 sind vorzugsweise aufeinander abgestimmt, damit alle Codes 36 im Bild sichtbar sind.

Die Steuer- und Auswertungseinheit 18 findet mittels Bildauswertungsverfahren die Codebereiche mit den Codes 36 und liest deren Codeinhalte. Dabei sind alle ein- und zweidimensionalen Codestandards denkbar. Das kamerabasierte Lesen optischer Codes an sich ist bekannt und wird hier nicht näher beschrieben. Im Falle mehrerer Kameraköpfe nimmt jeder Kamerakopf seinen Teilausschnitt des Sichtfeldes 14 auf. Diese Bilddaten werden dann fusioniert, und die Codes 36 werden in dem gemeinsamen Bild gelesen. Alternativ werden Codes 36 aus den einzelnen Bildern gelesen und die Daten dann erst auf Ebene von gelesenen Codeinformationen gesammelt.

In bevorzugten Ausführungsformen werden mehrere Aufnahmen erzeugt. Erneut ist alternativ denkbar, anschließend zunächst die Bilddaten zu fusionieren, um ein qualitativ höherwertiges Bild zu erhalten und darin die Codes 36 zu lesen, oder schon in den jeweiligen Bildern Codes 36 zu lesen, um so letztlich für jeden Code 36 mehrere Versuche auf unterschiedlichen Bilddaten vorzunehmen. Ein Beispiel für das Erfassen von höherwertigen Bilddaten durch Mehrfachaufnahme ist HDR (High Dynamic Range).

Solche Mehrfachaufnahmen werden vorzugsweise in verschiedenen Beleuchtungsszenarien erzeugt, indem unterschiedliche Beleuchtungsmodule 16a-b aktiviert und/oder deren Beleuchtungsintensität verändert wird. Ein Beispiel ist eine dreistufige Beleuchtungssequenz mit drei Aufnahmen, für die der zunächst das linke Beleuchtungsmodul 16a, dann das rechte Beleuchtungsmodul 16b und schließlich beide Beleuchtungsmodule 16a-b eingeschaltet werden. Dadurch werden Lesefehler durch störende Reflexionen minimiert. Die Anzahl der Beleuchtungsmodule 16a-b und damit die Anzahl möglicher Beleuchtungsszenarien sowie die Reihenfolge in der Beleuchtungssequenz ist nicht festgelegt. Vielmehr können die Beleuchtungsszenarien und Mehrfachaufnahmen anwendungsbezogen parametriert werden.

Durch den parallelen Leseprozess auf Basis der Bilddaten der Kameraeinheit 12 werden nur im Idealfall sämtliche Codes 36 gelesen. Um eine noch höhere Leserate zu erreichen, können im Anschluss die bisher nicht lesbaren Codes 36 mit dem optionalen Handscanner 26 nachgelesen werden. Dabei kann der Bediener durch die Anzeige 20 unterstützt werden, auf der beispielsweise die bereits gelesenen Codes 36 oder die Orte von als Objekt 34 oder Code 36 erkannten Bereiche markiert werden, in denen noch nachgelesen werden muss. Außerdem wird vorzugsweise die Anzahl gelesener Codes 36 und, sofern diese Anzahl vorgegeben ist oder per Bildauswertung ermittelt wurde, auch die Anzahl insgesamt vorhandener Codes 36 angezeigt.

Optional werden die Codeinformationen über die Schnittstelle 28 in einer zentralen Datenbank, die hier beispielhaft in der Cloud 30 implementiert ist, verifiziert und bei Übergabe an den Endkunden auch ausgebucht. Die Datenbank, insbesondere eine Pharma- oder Tabak-Verifikationsplattform, wird in der Regel von einem Dienstleister betrieben.

Die Steuer- und Auswertungseinheit 18 leistet sämtliche auf Seiten der Codelesevorrichtung 10 erforderlichen Schritte der Kommunikation. Die Datenbank und die konkrete Ausgestaltung der Kommunikation mit der Datenbank sind nicht Gegenstand der Erfindung und an sich bekannt. Beispielsweise wird dies in der DE 20 2019 104 044 U1 erläutert, wobei WO 2019/149908 A1 Möglichkeiten der Absicherung durch Verschlüsselung und Blockchain beschreibt.

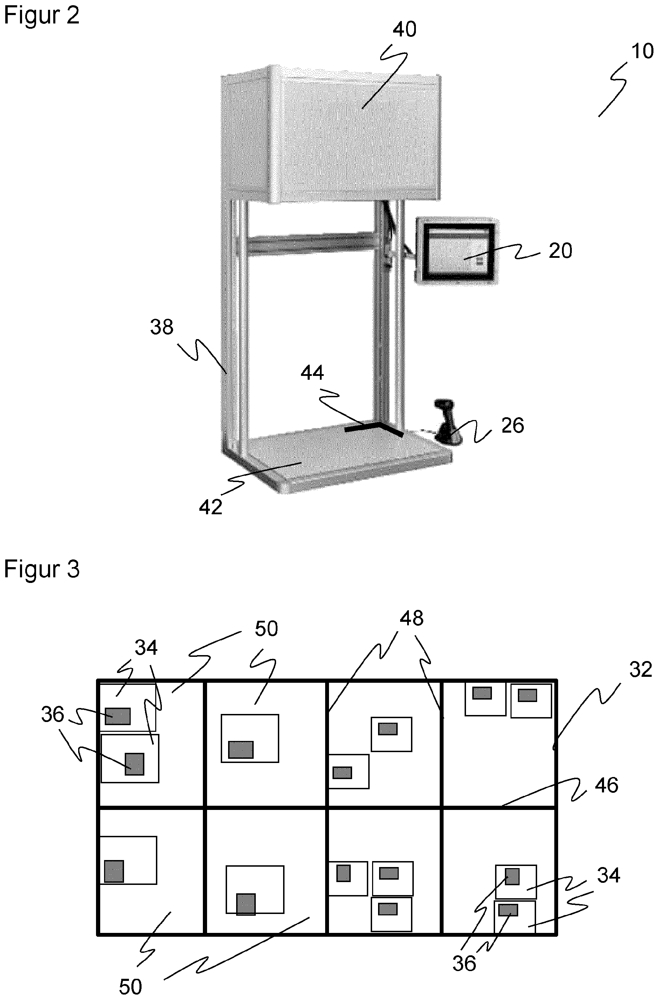

Figur 2 zeigt eine weitere dreidimensionale Ansicht einer möglichen mechanischen Ausgestaltung der Codelesevorrichtung 10. Ein Gerüst 38 verbindet die verschiedenen Elemente der Codelesevorrichtung 10 mechanisch miteinander, so dass das Komplettsystem auch physisch eine Einheit bildet. An dem Gerüst 38 sind die hier hinter einer Abdeckung 40 untergebrachte Kameraeinheit 12 und die Beleuchtungsmodule 16a-b derart befestigt, dass die Kiste 32 innerhalb des Tiefenschärfenbereichs aufgenommen wird, wenn sie auf eine am Gerüst 38 vorgesehenen Auflage 42 gestellt wird. Die Steuer- und Auswertungseinheit 18 kann im Gerüst 38 verborgen sein, und darauf wird über die als Touchscreen ausgestaltete Anzeige 20 und/oder alternative Bedienelemente zugegriffen, die jeweils gut erreichbar am Gerüst 38 angebracht sind. Für den optionalen Handscanner 26 ist vorzugsweise zumindest eine Ablagestation am Gerüst 38 vorgesehen, die auch ein drahtloses Gerät auflädt, oder der Handscanner 26 kann durch eine Anschlussleitung oder eine Halterungsschnur verbunden sein, die verhindert, dass der Handscanner 26 von der Codelesevorrichtung 10 entfernt wird.

An dem Gerüst 38 beziehungsweise der Auflage 42 befindet sich ferner ein mechanischer Anschlag 44, der eine auf die Auflage 42 gestellte Kiste 32 in eine wohldefinierte Position und Orientierung bringt. Der mechanische Anschlag 44 ist als Winkel dargestellt, aber darauf nicht beschränkt. Insbesondere kann der mechanische Anschlag 44 eine andere Kontur, mindestens eine Seitenwand und/oder eine passende Vertiefung für die Kiste 32 aufweisen. Auch ein Aufdruck ist denkbar, der dem Anwender die vorgesehene Positionierung intuitiv mitteilt.

In manchen Codeleseanwendungen sollen die gelesenen Codes 36 einer Position innerhalb der Kiste 32 zugeordnet werden. Insbesondere kann die Kiste 32 virtuell oder physikalisch in Subcontainer oder Teilbereiche unterteilt sein, denen die gelesenen Codes 36 zugeordnet werden. Das ergibt eine Art von geometrischen Filtern, die es ermöglichen, Codes 36 gezielt entsprechend ihrer Position oder ihres Teilbereichs weiterzuverarbeiten. Ein Beispiel sind individualisierte Kontaktlinsenpackungen in einzelnen Fächern einer Kiste 32, wobei die Fächer jeder Kontaktlinsenpackung einen eindeutigen Lagerplatz zuweisen, der durch die Zuordnung in der weiteren Verarbeitung auch bekannt ist.

Figur 3 zeigt zur weiteren Erläuterung dieses Konzepts eine schematische Draufsicht auf eine Vielzahl von Objekten 34 mit Codes 36 in einer Kiste 32. Die Kiste 32 ist durch mindestens eine horizontale Unterteilung 46 und/oder mindestens eine vertikale Unterteilung 48 in mehrere Teilbereiche unterteilt. Die Unterteilungen 46, 48 können lediglich virtuell sein, vorzugsweise handelt es sich um physische Unterteilungen 46, 48, so dass als Teilbereiche Fächer 50 in der Kiste 32 entstanden sind.

Die Steuer- und Auswertungseinheit 18 soll nun die Codes 36 nicht nur lesen, sondern die Codes 36 beziehungsweise die zugehörigen Objekte 34 auch dem richtigen Fach 50 zuordnen. Dazu werden zunächst die jeweiligen Koordinaten des Codes 36 innerhalb des aufgenommenen Bildes bestimmt. Für das Decodieren müssen die Codebereiche ohnehin aufgefunden werden, deren Position im Bild ist damit bekannt.

Allerdings ist das nur die Position im Bild und noch nicht die Position in der Kiste 32. Es wird deshalb zusätzlich die Position der Kiste 32 im Bild und die Position eines jeweiligen Codes 36 bezüglich der Position der Kiste 32 bestimmt. Es ist vorstellbar, die Position der Kiste 32 jeweils durch Bildverarbeitung zu bestimmen. Bevorzugt wird aber die Kiste 32 jeweils in eine wohldefinierte Position gebracht, die beispielsweise durch den mechanischen Anschlag 44 festgelegt ist. Auf dem einen oder dem anderen Weg sind somit die Positionen der Codes 36 im Bild in Positionen der Codes in der Kiste 32 umrechenbar. Letztere Positionen werden nun für eine Klassifikation verwendet, mit der ein Code 36 einem Fach 50 zugeordnet wird.

Für diese Klassifikation muss die Lage der Fächer 50 bekannt sein, damit die Positionen der Codes 36 damit verglichen werden können. Dafür ist denkbar, die Unterteilungen 46, 48 und damit die Fächer 50 jeweils mittels Bildverarbeitung in einem aufgenommenen zu finden. Vorzugsweise erfolgt aber vor dem eigentlichen Betrieb in einem Einrichtmodus der Codelesevorrichtung 10 eine Kalibrierung der Fächer 50. Dabei wird eine Kiste 32 des später im Betrieb verwendeten Typs in die durch den mechanischen Anschlag 44 vorgegebene Position gebracht und aufgenommen. Mittels Bildverarbeitung, insbesondere Kantendetektion, werden die Unterteilungen 46, 48 und damit die Fächer aufgefunden, und deren jeweilige Positionen werden für den späteren Betrieb gespeichert.

Alternativ zu klassischer Bildverarbeitung können Verfahren des maschinellen Lernens, insbesondere ein neuronales Netz, für die Zuordnung eines Codes 36 zu einem Fach eingesetzt werden. In einem vorgelagerten Training wird dem Verfahren des maschinellen Lernens anhand von Beispielbildern mit bekannter Zuordnung von Codes 36 zu Fächern 50 die gewünschte Klassifikation beigebracht.

Nach erfolgter Zuordnung von Codes 36 zu Fächern 50 ist für die Codes 36 in einer Kiste 32 sowohl deren Codeinhalt als auch das Fach 50 bekannt, in dem sich der jeweilige Code 36 und damit das den Code 36 tragende Objekt 34 befindet. Die Zusatzinformation des Faches 50 kann als eine Art geometrisches Filter verstanden werden, das nun verschiedene differenziertere Verarbeitungsschritte zulässt. Beispielsweise können Codes 36 gleichen Inhalts anhand eines unterschiedlichen Faches 50 doch noch vereinzelt und damit erfolgreich verarbeitet werden.

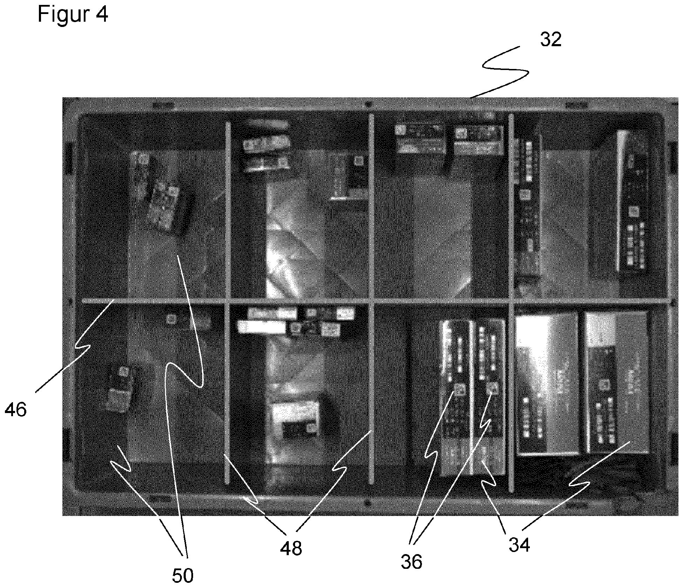

Figur 4 zeigt abschließend ein beispielhaftes Kamerabild entsprechend der schematischen Draufsicht der Figur 3.

## Patentansprüche

1. System (10, 32) mit mindestens einer Beförderungseinheit (32) und mit einer Codelesevorrichtung (10) zum parallelen Lesen einer Vielzahl von Codes (36) auf einer Vielzahl von Objekten (34) in der Beförderungseinheit (32), wobei die Codelesevorrichtung (10) eine Kameraeinheit (12) mit mindestens einem Kamerakopf zum Aufnehmen eines Bildes der Objekte (34) mit den Codes (36) sowie eine Steuer- und Auswertungseinheit (18) aufweist, die dafür ausgebildet ist, in dem Bild Codebereiche der Codes (36) aufzufinden, die Codeinformation der Codes (36) zu lesen und die Position eines jeweiligen Codes (36) in dem Bild zu bestimmen,
**dadurch gekennzeichnet,**
**dass** die Beförderungseinheit (32) eine Vielzahl von durch Unterteilungen (46, 48) voneinander separierten Teilbereichen (50) aufweist und dass die Steuer- und Auswertungseinheit (18) weiterhin dafür ausgebildet ist, die Position eines Codes (36) in dem Bild einem Teilbereich (50) zuzuordnen sowie in einem Einrichtmodus die Teilbereiche (50) anhand eines Bildes einer Beförderungseinheit (32) einzulernen, das an einer festgelegten Position der Beförderungseinheit (32) bezüglich der Kameraeinheit (12) aufgenommen ist.

2. System (10, 32) nach Anspruch 1,
wobei die Steuer- und Auswertungseinheit (18) dafür ausgebildet ist, zwei Codes (36) gleichen Codeinhalts anhand ihrer Position oder dem zugeordneten Teilbereich (50) zu unterscheiden.

3. System (10, 32) nach Anspruch 1 oder 2,
das Bild der Beförderungseinheit (32) in dem Einrichtmodus ein Bild einer leeren Beförderungseinheit (32) ist.

4. System (10, 32) nach einem der vorherigen Ansprüche,
wobei die Beförderungseinheit (32) mittels eines mechanischen Anschlags (44) in eine festgelegte Position gebracht ist.

5. System (10, 32) nach einem der vorhergehenden Ansprüche,
wobei die Steuer- und Auswertungseinheit (18) dafür ausgebildet ist, die Teilbereiche (50) einzulernen, indem Kanten von Abtrennungen (46, 48) der Teilbereiche (50) in dem Bild der Beförderungseinheit (32) erkannt werden.

6. System (10, 32) nach einem der vorhergehenden Ansprüche,
wobei die Steuer- und Auswertungseinheit (18) dafür ausgebildet ist, einen Code (36) einem Teilbereich (50) mit Hilfe eines Verfahrens des maschinellen Lernens zuzuordnen.

7. System (10, 32) nach Anspruch 6,
wobei die Steuer- und Auswertungseinheit (18) dafür ausgebildet ist, das Verfahren des maschinellen Lernens mittels überwachten Lernens zu trainieren, wobei dem Verfahren des maschinellen Lernens wiederholt Bilder von Beförderungseinheiten (32) mit Codes (36) und bekannter Zuordnung zu einem jeweiligen Teilbereich (50) präsentiert werden.

8. System (10, 32) nach einem der vorhergehenden Ansprüche,
wobei die Codelesevorrichtung (10) mehrere Kameraköpfe aufweist, wobei die Steuer- und Auswertungseinheit (18) dafür ausgebildet ist, die Bilddaten der Kameraköpfe zu einem gemeinsamen Bild zusammenzufügen und/oder die Codes (36) in den jeweiligen Bilddaten zu lesen und miteinander zu vergleichen.

9. System (10, 32) nach einem der vorhergehenden Ansprüche,
wobei die Kameraeinheit (12) eine veränderbare Beleuchtungseinheit (16a-b) aufweist, und wobei die Steuer- und Auswertungseinheit (18) dafür ausgebildet ist, für das parallele Lesen der Codes (36) die Objekte (34) mehrfach unter verschiedenen Beleuchtungen aufzunehmen.

10. System (10, 32) nach einem der vorhergehenden Ansprüche,
das ein Gerüst (38) mit einer Auflage (42) aufweist, auf die die Beförderungseinheit (32) gestellt ist, wobei die Kameraeinheit (12) stationär an dem Gerüst (38) angeordnet ist.

11. System (10, 32) nach Anspruch 10,
wobei die Auflage (42) einen mechanischen Anschlag (44) aufweist, um der Beförderungseinheit (32) eine festgelegte Position bezüglich der Kameraeinheit (12) zu geben.

12. Verfahren zum parallelen Lesen einer Vielzahl von Codes (36) auf einer Vielzahl von Objekten (34) in einer Beförderungseinheit (32), bei dem mit einer Kameraeinheit (12) mit mindestens einem Kamerakopf ein Bild der Objekte (34) aufgenommen wird, in dem Bild Codebereiche der Codes (36) aufgefunden und die Codeinformation der Codes (36) gelesen werden und die Position eines jeweiligen Codes (36) in dem Bild bestimmt wird,
**dadurch gekennzeichnet,**
**dass** die Beförderungseinheit (32) eine Vielzahl von durch Unterteilungen (46, 48) voneinander separierten Teilbereichen (50) aufweist, dass die Position eines Codes (36) in dem Bild einem Teilbereich (50) zugeordnet wird und dass in einem Einrichtmodus die Teilbereiche (50) anhand eines Bildes einer Beförderungseinheit (32) eingelernt werden, das an einer festgelegten Position der Beförderungseinheit (32) bezüglich der Kameraeinheit (12) aufgenommen ist.

## Claims

1. A system (10, 32) with at least one conveying unit (32) and with a code reading device (10) for parallel reading of a plurality of codes (36) on a plurality of objects (34) in the conveying unit (32), the code reading device (10) comprising a camera unit (12) with at least one camera head for recording an image of the objects (34) with the codes (36) and a control and evaluation unit (18) configured to locate code regions of the codes (36) in the image, to read the code information of the codes (36) and to determine the position of a respective code (36) in the image,
**characterized in that** the conveying unit (32) comprises a plurality of subareas (50) separated from one another by partitions (46, 48), and **in that** the control and evaluation unit (18) is furthermore configured to assign the position of a code (36) in the image to a subarea (50) and, in a set-up mode, to teach in the subareas (50) using an image of a conveying unit (32) which is recorded at a fixed position of the conveying unit (32) with respect to the camera unit (12).

2. The system (10, 32) according to claim 1,
wherein the control and evaluation unit (18) is configured to distinguish between two codes (36) of the same code content on the basis of their position or the associated subarea (50).

3. The system (10, 32) according to claim 1 or 2,
wherein the image of the conveying unit (32) in the set-up mode is an image of an empty conveying unit (32).

4. The system (10, 32) according to any of the preceding claims,
wherein the conveying unit (32) is brought into a fixed position by means of a mechanical stop (44).

5. The system (10, 32) according to any of the preceding claims,
wherein the control and evaluation unit (18) is configured to teach in the subareas (50) by recognizing edges of partitions (46, 48) of the subareas (50) in the image of the conveying unit (32).

6. The system (10, 32) according to any of the preceding claims,
wherein the control and evaluation unit (18) is configured to assign a code (36) to a subarea (50) with the aid of a machine learning method.

7. The system (10, 32) according to claim 6,
wherein the control and evaluation unit (18) is configured to train the machine learning method by means of supervised learning, wherein the machine learning method is repeatedly presented with images of conveying units (32) with codes (36) and known assignment to a respective subarea (50).

8. The system (10, 32) according to any of the preceding claims,
wherein the code reading device (10) comprises a plurality of camera heads, wherein the control and evaluation unit (18) is configured to combine the image data of the camera heads to form a common image and/or to read the codes (36) in the respective image data and to compare them with one another.

9. The system (10, 32) according to any of the preceding claims,
wherein the camera unit (12) has a variable illumination unit (16a-b), and wherein the control and evaluation unit (18) is configured to record the objects (34) several times under different illuminations for the parallel reading of the codes (36).

10. The system (10, 32) according to any of the preceding claims,
comprising a scaffold (38) with a support (42) on which the conveying unit (32) is placed, wherein the camera unit (12) is arranged stationary on the scaffold (38).

11. The system (10, 32) according to claim 10,
wherein the support (42) comprises a mechanical stop (44) to give the conveying unit (32) a fixed position with respect to the camera unit (12).

12. A method for parallel reading of a plurality of codes (36) on a plurality of objects (34) in a conveying unit (32), wherein an image of the objects (34) is recorded with a camera unit (12) with at least one camera head, code areas of the codes (36) are found in the image and the code information of the codes (36) is read and the position of a respective code (36) in the image is determined, **characterized in that** the conveying unit (32) comprises a plurality of subarea (50) separated from one another by partitions (46, 48), **in that** the position of a code (36) in the image is assigned to a subarea (50), and **in that**, in a set-up mode, the subareas (50) are learned using an image of a conveying unit (32) which is recorded at a fixed position of the conveying unit (32) with respect to the camera unit (12).

## Revendications

1. Système (10, 32) comprenant au moins une unité de transport (32) et un dispositif de lecture de codes (10) pour lire en parallèle une pluralité de codes (36) sur une pluralité d'objets (34) situés dans l'unité de transport (32), le dispositif de lecture de code (10) comprenant une unité de caméra (12) présentant au moins une tête de caméra pour prendre une image des objets (34) munis des codes (36), ainsi qu'une unité de commande et d'évaluation (18) conçue pour trouver dans l'image des zones de code des codes (36), pour lire l'information de code des codes (36) et pour déterminer la position d'un code respectif (36) dans l'image,
**caractérisé en ce que**
l'unité de transport (32) présente une pluralité de zones partielles (50) séparées les unes des autres par des subdivisions (46, 48), et
**en ce que** l'unité de commande et d'évaluation (18) est en outre conçue pour associer la position d'un code (36) dans l'image à une zone partielle (50) et pour apprendre, dans un mode de configuration, les zones partielles (50) à l'aide d'une image d'une unité de transport (32) qui est prise à une position définie de l'unité de transport (32) par rapport à l'unité de caméra (12).

2. Système (10, 32) selon la revendication 1,
dans lequel l'unité de commande et d'évaluation (18) est conçue pour distinguer deux codes (36) de même contenu de code à l'aide de leur position ou de la zone partielle (50) associée.

3. Système (10, 32) selon la revendication 1 ou 2,
dans lequel, dans le mode de configuration, l'image de l'unité de transport (32) est une image d'une unité de transport (32) vide.

4. Système (10, 32) selon l'une des revendications précédentes,
dans lequel l'unité de transport (32) est placée dans une position définie au moyen d'une butée mécanique (44).

5. Système (10, 32) selon l'une des revendications précédentes,
dans lequel l'unité de commande et d'évaluation (18) est conçue pour apprendre les zones partielles (50) en détectant des bords de séparations (46, 48) des zones partielles (50) dans l'image de l'unité de transport (32).

6. Système (10, 32) selon l'une des revendications précédentes,
dans lequel l'unité de commande et d'évaluation (18) est conçue pour associer un code (36) à une zone partielle (50) à l'aide d'un procédé d'apprentissage automatique.

7. Système (10, 32) selon la revendication 6,
dans lequel l'unité de commande et d'évaluation (18) est conçue pour entraîner le procédé d'apprentissage automatique au moyen d'un apprentissage supervisé, et
des images d'unités de transport (32) munies de codes (36) et une association connue à une zone partielle (50) respective sont présentées de manière répétée au procédé d'apprentissage automatique.

8. Système (10, 32) selon l'une des revendications précédentes,
dans lequel le dispositif de lecture de codes (10) comporte plusieurs têtes de caméra,
l'unité de commande et d'évaluation (18) est conçue pour assembler les données d'image des têtes de caméra en une image commune et/ou pour lire les codes (36) dans les données d'image respectives et pour les comparer entre eux.

9. Système (10, 32) selon l'une des revendications précédentes,
dans lequel l'unité de caméra (12) comprend une unité d'éclairage modifiable (16a-b), et
l'unité de commande et d'évaluation (18) est conçue pour enregistrer plusieurs fois les objets (34) sous différents éclairages pour la lecture parallèle des codes (36).

10. Système (10, 32) selon l'une des revendications précédentes,
comprenant un bâti (38) muni d'un support (42) sur lequel l'unité de transport (32) est placée, l'unité de caméra (12) étant disposée de manière stationnaire sur le bâti (38).

11. Système (10, 32) selon la revendication 10,
dans lequel le support (42) comprend une butée mécanique (44) pour donner à l'unité de transport (32) une position définie par rapport à l'unité de caméra (12).

12. Procédé de lecture parallèle d'une pluralité de codes (36) sur une pluralité d'objets (34) situés dans une unité de transport (32),
dans lequel une image des objets (34) est prise au moyen d'une unité de caméra (12) présentant au moins une tête de caméra, des zones de code des codes (36) sont trouvées dans l'image, et l'information de code des codes (36) est lue et la position d'un code respectif (36) dans l'image est déterm inée,
**caractérisé en ce que**
l'unité de transport (32) présente une pluralité de zones partielles (50) séparées les unes des autres par des subdivisions (46, 48),
**en ce que** la position d'un code (36) dans l'image est associée à une zone partielle (50), et
**en ce que**, dans un mode de configuration, les zones partielles (50) sont apprises à l'aide d'une image d'une unité de transport (32) qui est prise à une position définie de l'unité de transport (32) par rapport à l'unité de caméra (12).
